# EUROPÄISCHE PATENTANMELDUNG

(11) **EP 1 286 498 A1**
(43) Veröffentlichungstag der Anmeldung: **26.02.2003**
(21) Anmeldenummer: 01440279.6
(22) Anmeldetag: 21.08.2001
(51) Int. Cl.: H04L 12/24

(54) **Verfahren, Dienst-Agent und Netzwerk-Management-System zur Bedienung eines Telekommunikationsnetzes**

(71) Anmelder: ALCATEL, 75008 Paris (FR)
(72) Erfinder: Hain, Elke, 16547 Birkenwerder (DE)
(74) Vertreter: Rausch, Gabriele, Dr.

(57) **Zusammenfassung**

Die vorliegende Erfindung betrifft ein Verfahren zur Bedienung eines Telekommunikationsnetzes, einen Dienst-Agenten (DA1, DA2) hierfür und ein damit ausgestattetes Netzwerk-Management-System, insbesondere in Gestalt mindestens eines Rechners eines Netzwerk-Management-Systems oder eines Bedienoberflächenmoduls, hierfür.

Bei dem Verfahren werden mindestens ein Netzelement (N1-N3) des Telekommunikationsnetzes (NW) betreffende Ereignisinformationen (E1-E11) an einen Dienst-Agenten (DA1, DA2) für einen Wartungs- und/oder Überwachungsund/oder Steuerungs-Dienst bezüglich des mindestens einen Netzelementes (N1-N3) übermittelt und die für den mit Hilfe des Dienst-Agenten (DA1, DA2) zu erbringenden Dienst irrelevanten Ereignisinformationen (E10, E11 ) ausgefiltert. Der Dienst-Agent (DA1, DA2) ermittelt mindestens eine Relation (RL1 ) zwischen mindestens einer ersten relevanten Ereignisinformation (E1 ) und mindestens einer zweiten Ereignisinformation (E2) bezüglich des zu erbringenden Dienstes und weist Ausgabemittel (UI) zu einer Ausgabe der mindestens einen ersten Ereignisinformation (E1) und der mindestens einen zweiten Ereignisinformation (E2) gemäß der mindestens einen Relation (RL1) an.

## Beschreibung

Die vorliegende Erfindung betrifft ein Verfahren zur Bedienung eines Telekommunikationsnetzes, einen Dienst-Agenten hierfür und ein damit ausgestattetes Netzwerk-Management-System, insbesondere in Gestalt mindestens eines Rechners eines Netzwerk-Management-Systems oder eines Bedienoberflächenmoduls, hierfür.

Netzelemente eines Telekommunikationsnetzes, beispielsweise Vermittlungsstellen, Router, Netzwerk-Dienste oder dergleichen senden beim Eintreten von Ereignissen Ereignisinformationen in Form von Ereignismeldungen an ein sie verwaltendes Netzwerk-Management-System. Die Ereignismeldungen betreffen beispielsweise eine Störung im jeweiligen Netzelement, die Überschreitung eines Grenzwertes oder die Änderung des Konfigurationszustandes des verwalteten Netzelementes. Im Netzwerkmanagementsystem werden die Ereignisinformationen auf verschiedene Weise verarbeitet: Beispielsweise werden sie in eine Datenbank eingeschrieben oder an einer Bedienoberfläche angezeigt. Dabei ist es allgemein üblich, dass die Ereignisinformationen in Form von Listen angezeigt werden, die häufig einen beträchtlichen Umfang erreichen. Dies ist insbesondere darauf zurückzuführen, dass ein Ereignis, beispielsweise eine Störung, zahlreichen Folgeereignisse, insbesondere Folgestörungen, auslöst. Wenn beispielsweise bei einem Netzelement die Stromversorgung ausfällt, meldet das Netzelement nicht nur den Ausfall der Stromversorgung, sondern auch Ausfälle von von der Stromversorgung abhängigen Baugruppen. Wenn das Netzelement beispielsweise eine Vermittlungsstelle ist, werden zudem zahlreiche Verbindungen, die von der Vermittlungsstelle bedient werden, als ausgefallen bzw. gestört gemeldet.

Man könnte die Flut der Ereignisinformationen beispielsweise dadurch kanalisieren, dass in einer Ereignisliste nur die wichtigen, nicht aber die weniger wichtigen Ereignisinformationen angezeigt werden. Hierfür muss ein Bediener des Netzwerk-Management-Systems jedoch umfangreiche Filterkriterien angeben, um die Liste der Ereignisinformationen zu filtern, so dass er letztlich nur die wichtigsten Ereignisinformationen angezeigt bekommt. Dies hat allerdings den Nachteil, dass die weniger wichtigen Ereignisinformationen, die von den wichtigeren Ereignisinformationen möglicherweise abhängig sind, unterdrückt werden und für den Bediener unsichtbar bleiben.

Die gleiche Problematik ergibt sich auch dann, wenn die Ereignisinformationen nicht an eine Bedienoberfläche für eine Bedien-Person, sondern beispielsweise an einen Störungsbehebungs-Prozess gemeldet werden, der zur automatischen Behebung einer Störung vorgesehen ist. Auch dessen Funktion kann durch eine Flut von Ereignisinformationen beeinträchtigt oder sogar unmöglich sein.

Es ist daher Aufgabe der Erfindung, die Bedienbarkeit eines Telekommunikationsnetzes hinsichtlich der Verarbeitung von Ereignisinformationen zu verbessern.

Diese Aufgabe wird gelöst durch ein Verfahren gemäß der technischen Lehre des Anspruches 1.

Zur Lösung der Aufgabe sind ferner vorgesehen: ein Dienst-Agent sowie ein mit mindestens einem derartigen Dienst-Agenten ausgestattetes Netzwerk-Management-System, insbesondere in Gestalt mindestens eines Rechners oder eines Bedienoberflächenmoduls gemäß weiterer unabhängiger Ansprüche.

Der Erfindung liegt dabei der Gedanke zu Grunde, Ereignisinformationen für einen zu erbringenden Dienst, beispielsweise einen Wartungs- und/oder Überwachungsund/oder Steuerungs-Dienst bezüglich mindestens eines Netzelementes am jeweils zu erbringenden Dienst orientiert, sozusagen aufgabenorientiert, an Ausgabemitteln, beispielsweise einer Bedienoberfläche, auszugeben, beispielsweise visuell und/oder akustisch oder in einer sonstigen geeigneten Weise.

Die Ereignisinformationen werden zunächst gefiltert, wobei für den zu erbringenden Dienst irrelevante Ereignisinformationen ausgefiltert werden. Wenn als Dienst beispielsweise Teilnehmer-Anschlüsse des Telekommunikationsnetzes gesteuert und/oder überwacht werden sollen, werden Ereignisinformationen bezüglich sonstiger Störungen im Telekommunikationsnetz, z.B. in einem Signalisierungsnetz des Telekommunikationsnetzes ausgefiltert. Sollen jedoch Störungen im Signalisierungsnetz beseitigt werden, werden beispielsweise Ereignisinformationen bezüglich Teilnehmer-Anschlüssen als für den zu erbringenden Dienst irrelevant ausgefiltert.

Ereignisinformationen im Sinne der Erfindung sind unkritische Ereignisinformationen, z.B. zyklisch gesendete Messwertinformationen, und kritische Ereignisinformationen, beispielsweise auch Alarme.

Anschließend werden die nicht ausgefilterten, für den zu erbringenden Dienst relevanten Ereignisinformationen in Bezug zueinander gesetzt. Im allereinfachsten Fall kann das zwar bedeuten, dass alle relevanten Ereignisinformationen sozusagen auf derselben Relevanz-Ebene angeordnet sind, mithin gleich relevant für den zu erbringenden Dienst sind. Interessanter ist jedoch der Fall, dass die Ereignisinformationen eine unterschiedliche Relevanz aufweisen, d.h. dass beispielsweise eine erste Ereignisinformation relevanter als eine zweite Ereignisinformation in Bezug auf den zu erbringenden Dienst ist und die Ereignisinformationen dementsprechend dargestellt werden. Ferner ist es denkbar, dass die zweite Ereignisinformation von der ersten Ereignisinformation abhängt. Um auf das eingangs genannte Beispiel zurückzukommen, könnte dies beispielsweise heißen, dass eine erste Ereignisinformation den Ausfall einer Stromversorgung eines Netzelementes signalisiert und eine zweite Ereignisinformation einen Folgefehler, beispielsweise den Ausfall einer von der Stromversorgung abhängigen Ein-/Ausgabe-Baugruppe des Netzelementes.

Jedenfalls werden die bezüglich des zu erbringenden Dienstes relevanten Ereignisinformationen, nachdem mindestens eine Relation zwischen mindestens einer ersten und einer zweiten Ereignisinformation ermittelt worden ist, gemäß der mindestens einen Relation ausgegeben. Ein geeignetes Ausgabemittel hierfür ist beispielsweise eine Bedienoberfläche eines Netzwerk-Management-Systems, auf der gemäß der Erfindung nicht nur die Ereignisinformationen an sich, sondern auch die zwischen diesen bestehenden Relationen visualisiert werden. Ausführungsformen für die Visualisierung von Ereignisinformation und zwischen diesen bestehenden Relationen werden später noch im Zusammenhang mit den Ausführungsbeispielen vorgestellt. Jedenfalls werden einem Bediener die Ereignisinformationen strukturiert und in Relation zueinander vorgestellt, so dass der Bediener bezüglich des zu erbringenden Dienstes schnell eine Übersicht gewinnt und insbesondere die für den Dienst wichtigsten Ereignisinformationen vorrangig bearbeiten kann, beispielsweise eine besonders folgenschwere Störung zuerst beseitigen kann.

Die Vorteile der Erfindung zeigen sich auch dann, wenn die in Relation zueinander gesetzten Ereignisinformationen an einen Ereignis-Verarbeitungsprozess weitergeleitet werden, beispielsweise einen Prozess, der automatisch eine Störung beseitigt. Beispielsweise könnte ein Verarbeitungsprozess vorgesehen sein, der auf die vorher erläuterten Ereignisinformationen "Stromversorgung defekt" und "Ein-/Ausgabebaugruppe defekt" hin geeignete Maßnahmen ergreift, beispielsweise auf ein redundantes Netzelement mit intakter Stromversorgung bzw. auf eine noch nicht als defekt gemeldete Ein-/Ausgabebaugruppe umschaltet. Wenn die Ereignisinformation "Ein-/Ausgabebaugruppe defekt" erfindungsgemäß als eine von der Ereignisinformation "Stromversorgung defekt" abhängige Ereignisinformation an den Verarbeitungsprozess ausgegeben wird, kann dieser unmittelbar die geeignete Maßnahme ergreifen, nämlich auf das redundante Netzelement umschalten und versucht nicht zunächst, von der defekten Ein-/Ausgabebaugruppe auf eine noch nicht als defekt gemeldete Ein-/Ausgabebaugruppe umzuschalten. Diese Maßnahme wäre jedoch vorliegend erfolglos, da auch die Ein-/Ausgabebaugruppe, auf die umgeschaltet wird, von der defekten Stromversorgung abhängig und dementsprechend nicht betriebsbereit ist.

Zur Realisierung des erfindungsgemäßen Verfahrens eignet sich in besonderer Weise ein Dienst-Agent, der die Relation(en) zwischen den zur Erbringung des Diensten relevanten Ereignisinformationen ermittelt und Ausgabemittel der Ereignisinformationen gemäß der bzw. den Relation(en) anweist.

Der Dienst-Agent kann auf vielfältige Weise realisiert sein, beispielsweise als Programmmodul, dessen Programmcode von einem Steuermittel, beispielsweise einem Prozessor, eines Rechners ausgeführt werden kann. Der Dienst-Agent kann jedoch auch zumindest teilweise in Hardware ausgeführt sein, wozu sich beispielsweise programmierbare Logikbausteine eignen. Zudem ist es möglich, dass ein Rechner, z.B. ein Client-Rechner eines Netzwerk-Management-Systems, insgesamt einen Dienst-Agenten bildet.

Weitere vorteilhafte Ausgestaltungen der Erfindung finden sich in den abhängigen Ansprüchen sowie in der Beschreibung.

Wie bereits erwähnt, werden die Ereignisinformationen vorteilhaft in Abhängigkeit von ihrer Relevanz für den zu erbringenden Dienst ausgegeben.

Zweckmäßigerweise werden als Relation(en) zwischen den Ereignisinformationen Abhängigkeiten ermittelt. Bei den Abhängigkeiten kann es sich um sogenannte Vater-Sohn-Abhängigkeiten handeln oder auch um wechselseitige Abhängigkeiten.

Dabei ist vorzugsweise vorgesehen, dass eine Ereignisinformation, die von einer anderen Ereignisinformation abhängig ist, nachrangig ausgegeben wird. Vorrangig wird demnach eine sogenannte Vater-Ereignisinformation ausgegeben und nachrangig eine von dieser abhängige Sohn-Ereignisinformation. Ein Bediener einer Bedienoberfläche, auf der die beiden Ereignisinformationen ausgegeben werden, erhält somit schnell einen Überblick über die vorrangig zu bearbeitenden Ereignisinformationen und kann dennoch auf die nachrangig abhängigen Ereignisinformationen zugreifen.

Zweckmäßigerweise sind verschiedene Ausgabeformen für die jeweiligen Ereignisinformationen vorgesehen. Beispielsweise kann bei einer ersten Ausgabeform eine Vater-Ereignisinformation ausgegeben werden, bei einer zweiten Ausgabeform der oder die von dieser abhängigen Sohn-Ereignisinformation(en).

Eine gute Übersicht über die für einen Dienst relevanten Ereignisinformationen erhält man bei einer hierarchischen Darstellung der Ereignisinformationen. Vorzugsweise ist die Darstellung baumartig ausgestaltet, wobei beispielsweise von einer Vater-Ereignisinformation zu Sohn-Ereignisinformationen verzweigt wird. Von diesen können weitere Verzweigungen zu von diesen abhängigen Sohn-Ereignisinformationen führen usw.. Es wird also sozusagen eine Abhängigkeitskaskade oder ein Abhängigkeitsbaum angezeigt.

Es ist aber auch möglich, dass bei einer hierarchischen Darstellung der Ereignisinformationen auch sogenannte Registerkarten verwendet werden, wobei beispielsweise auf einer ersten Registerkarte eine oder mehrere besonders relevante Ereignisinformationen dargestellt sind und auf einer zweiten, von der ersten Registerkarte normalerweise verdeckten Registerkarte Ereignisinformationen, die weniger relevant sind und/oder von der oder den auf der ersten Registerkarte dargestellten Ereignisinformation(en) abhängig sind.

Die Ereignisinformationen können auch in jeweils separaten Listen dargestellt werden, wobei die Ereignisinformationen beispielsweise in Abhängigkeit ihrer Relevanz für den jeweiligen Dienst einer Liste zugeordnet werden.

Auch bei insgesamt für eine zu erbringenden Dienst relevanten Ereignisinformationen ist es möglich, dass Anteile davon für den Dienst irrelevant sind. Beispielsweise könnte bei der Ereignisinformation über die ausgefallene Baugruppe eine Angabe über den Versender der Ereignisinformation enthalten sein. Vorzugsweise ist vorgesehen, dass nur derjenige Anteil einer insgesamt für den zu erbringenden Anteil relevanten Ereignisinformation ausgegeben wird, der bezüglich des zur erbringenden Dienstes relevant ist. Beispielsweise wird dabei die vorgenannte Absenderangabe eliminiert. Eine Angabe hingegen, mit der sich die gestörte Stromversorgung innerhalb des Netzelementes lokalisieren lässt, wird ausgegeben.

Zur Ausfilterung der in Bezug auf den zu erbringenden Dienst irrelevanten Ereignisinformationen sind beliebige Vorgehensweisen möglich, die jeweils einzeln - oder auch in beliebiger Kombination miteinander - angewendet werden können:

Die irrelevanten Ereignisinformationen können beispielsweise bereits durch einen Sammelagenten, der die Ereignisinformationen von einem oder mehreren Netzelementen erhält, zumindest teilweise ausgefiltert werden. Hierfür können bei dem Sammelagenten Filterkriterien vordefiniert sein. Es ist aber auch möglich, dass der Dienst-Agent dem Sammelagenten die von ihm gewünschten Filterkriterien - zur dauerhaften Speicherung oder auch nur fallweise - übermittelt.

Bei einer anderen Variante wird die Filterung ganz oder teilweise durch einen sogenannten Filter-Agenten durchgeführt. Auch bei diesem können Filterkriterien in Bezug auf den zu bedienenden Dienst-Agenten vordefiniert sein. Es ist aber auch möglich, dass der Sammelagent dem Filter-Agenten Filterkriterien bezüglich der gewünschten Ereignisinformationen mitteilt. Ein solcher Filteragent kann beispielsweise ein sogenannter Event Forwarding Discriminator (EFD) oder Alarm Forwarding Discriminator (AFD) sein. Es ist auch möglich, dass der Dienst-Agent den Filter-Agenten startet und, beispielsweise nach Erhalt der gewünschten, relevanten Ereignisinformationen, wieder beendet. Der Filteragent kann beispielsweise zwischen den vorgenannten Sammelagenten und den Dienst-Agenten geschaltet sein.

Auch der Dienst-Agent selbst kann die Ausfilterung der für den zu erbringenden Dienst irrelevanten Ereignisinformationen vornehmen. Hierfür können beim Dienst-Agenten geeignete Filtermittel vorgesehen sein.

Im Folgenden werden die Erfindung und ihre Vorteile anhand eines Ausführungsbeispieis unter Zuhilfenahme der Zeichnung dargestellt. Es zeigen:
- Figur 1: Ein Netzwerk-Management-System NMS zur Steuerung eines Netzwerkes NW, mit dem das erfindungsgemäße Verfahren durchgeführt werden kann,
- Figur 2: einen erfindungsgemäßen Dienst-Agenten DA1 gemäß Figur 1 in schematischer Darstellung,
- Figur 3: eine Bedienoberfläche WUI, die von einem Bedienoberflächenmodul Ul gemäß Figur 1 erzeugt wird,
- Figur 4A, B: zwei unterschiedliche, durch den Dienst-Agenten DA1 gemäß den Figuren 1 und 2 erzeugte Ausgabeformen VW1, VW2 von Ereignisinformationen E1-E3, E8, E9,
- Figur 5: eine Ereignisinformation E1 mit Informationsparametern P1.- P5, und
- Figur 6: eine schematische Darstellung eines Servers SV1 gemäß Figur 1.

Mit dem Netzwerk-Management-System NMS können Netzelemente N1, N2, N3 eines Netzwerkes NW verwaltet, gesteuert und überwacht werden. Das Netzwerk NW ist beispielsweise ein Telefon- und/oder Rechner- und/oder Datennetzwerk. Bei den Netzelementen N1 - N3 handelt es sich beispielsweise um Vermittlungsstellen, Router, Server, Diensterechner zur Erbringung von Diensten eines intelligenten Netzes (IN) oder um einen Netzwerk-Dienst. Das Netzwerk NW kann auch weitere, nicht dargestellte Einrichtungen, beispielsweise weitere Netzelemente, Netzwerk-Dienste oder dergleichen enthalten.

Das Netzwerk-Management-System NMS enthält vorliegend Server SV1, SV2, die lediglich schematisch dargestellt sind. Bei den Servern SV1, SV2 handelt es sich um Rechner oder Rechnernetzwerke, die beispielsweise durch ein UNIX- oder ein Windwos-NT-Betriebssystem betrieben werden. Der Server SV2 ist funktional gleich aufgebaut wie der Server SV1, der im Folgenden kurz erläutert wird: Er enthält Sende- und Empfangsmittel KOM1, beispielsweise LAN- oder WAN-Schnittstellenkarten (LAN = Local Area Network, WAN = Wide Area Network), Modems oder dergleichen, mit denen Daten gesendet bzw. empfangen werden können. Ferner weist der Server SV1 Speichermittel MEM1 beispielsweise Festplattenlaufwerke und Speicher-Bausteine auf sowie Steuermittel CPU1, beispielsweise einen Prozessor oder ein Cluster von Prozessoren. Das Steuermittel CPU1 führt Befehle des vorgenannten Betriebssystems auf, das in den Speichermitteln MEM1 gespeichert ist. Weiterhin sind in dem Speichermittel MEM1 ein Bedienoberflächenmodul Ul oder in einer später noch erläuterten Variante der Erfindung mehrere Bedienoberflächenmodule UI1-UI3, Dienst-Agenten DA1, DA2 sowie ein Listenmodul OVV abgelegt, deren Programmcode von dem Steuermittel CPU1 ausgeführt werden kann. Weiter weist der Server SV1 Ausgabemittel 01, beispielsweise einen oder mehrere Monitore und einen Lautsprecher, und Eingabemittel 11, beispielsweise Tastatur und Maus, auf. Interne Verbindungen sind bei dem Server SV1 nicht dargestellt.

Zur Vereinfachung der Darstellung sind die Server SV1, SV2 als gleichartige Rechner dargestellt. Es ist aber auch möglich, dass der Server SV1 die Funktion eines Client-Rechners wahrnimmt, der als Client z.B. an den Server SV2 angekoppelt ist. Das Netzwerk-Management-System NMS kann neben den Servern SV1, SV2 auch weitere Server und/oder Clients enthalten. Das Netzwerk-Management-System NMS könnte jedoch auch nur einen einzigen Server enthalten.

Die Netzelemente N1, N2, N3 senden Ereignisinformationen an sogenannte verwaltete Objekte (englisch: Managed Objects) VO1, VO2 bzw. VO3 über Verbindungen VN1, VN2 bzw. VN3, die über ein nicht näher dargestelltes Steuernetzwerk führen. Die Ereignisinformationen betreffen beispielsweise Störungen, Grenzwertverletzungen, Lastmeldungen, Änderungen im Konfigurationszustand des jeweiligen Netzelementes N1 - N3 oder sonstige das jeweilige Netzelement N1 - N3 betreffende Ereignisse. Die verwalteten Objekte VO1, VO2, VO3 repräsentieren die Netzelemente NE1 - NE3 im Netzwerk-Management-System NMS. Beispielsweise wandeln die verwalteten Objekte VO1 - VO3 von den Netzelementen NE1 - NE3 gesendete Ereignismeldungen in ein Format um, das von den übrigen Komponenten des Netzwerk-Management-Systems NMS verstanden wird. In umgekehrter Richtung wandeln die verwalteten Objekte VO1 - VO3 Instruktionen, die von Komponenten des Netzwerk-Management-Systems NMS an die Netzelemente N1 - N3 zu senden sind, in ein für diese verständliches Format um.

Zur Verwaltung, zum Betreiben und Warten der verwalteten Objekte VO1 - VO3 bzw. der diesen zugeordneten Netzelemente N1 - N3 sind vorliegend Dienst-Agenten DA1, DA2 vorgesehen, die als vom Server SV1 ausgeführte Prozesse oder Gruppen von Prozessen ausgebildet sind. Beispielsweise können mit den Dienst-Agenten DA1, DA2 Software- oder Hardware-Störungen bei den Netzelementen N1 - N3 ermittelt und/oder behoben werden. Ferner kann beispielsweise die Belastung der Netzelemente N1 - N3 überwacht und/oder gesteuert werden oder können Gebühren berechnet werden, die für von den Netzelementen N1 - N3 aufgebaute Verbindungen, beispielsweise eine Verbindung VSS zwischen den Netzelementen N2 - N3 zu ermitteln und/oder berechnen sind.

Die Dienst-Agenten DA1, DA2 verarbeiten Ereignisinformationen, die von den Netzelementen N1 - N3 gesendet werden. Die Dienst-Agenten DA1,DA2 weisen das Bedienoberflächenmodul Ul oder bei einer bevorzugten Variante der Erfindung die Bedienoberflächenmodule Ul1 bzw. Ul3 zur Ausgabe der verarbeiteten Ereignisinformationen an. Zusätzlich ist bei dem Server SV1 ein Listenmodul OVV vorgesehen, das die vom Server SV1 empfangenen Ereignisinformationen in an sich bekannter Weise mit Hilfe der Bedienoberflächenmodule Ul oder Ul2 in einer Liste darstellt. Das Bedienoberflächenmodul Ul ist den Dienst-Agenten DA1, DA2 und dem Listenmodul OVV gemeinsam zugeordnet. Es ist aber auch möglich, dass bei einer bevorzugten Ausführungsform der Erfindung die Bedienoberflächenmodule Ul1, Ul3 und Ul2 den Dienst-Agenten DA1, DA2 bzw. dem Listenmodul OVV als individuelle Bedienoberflächenmodule zugeordnet sind, beispielsweise bei einer objektorientierten Ausgestaltung des Netzwerk-Management-Systems NMS . Ferner können die Dienst-Agenten DA1, DA2 so ausgestaltet sein, dass sie die Funktionen der Bedienoberflächenmodule Ul1 bzw. Ul3 selbst ausführen, wobei beispielsweise in einer X-Window-Umgebung entsprechende X-Window-Ausgabefunktionen in den Dienst-Agenten DA1, DA2 enthalten sind.

Die Funktionsweise der Dienst-Agenten DA1, DA2 wird im Folgenden näher erläutert:

Im Folgenden wird davon ausgegangen, dass der Dienst-Agent DA1 z.B. zur Behebung von Hardware-Störungen beim Netzelement N1 vorgesehen ist. Das Netzelement N1 sendet seine Ereignisinformationen an das verwaltete Objekt VO1. Dieses leitet die Ereignisinformationen über eine Verbindung V1D an eine Datenbank DB des Servers SV2 weiter. Ferner übermittelt das verwaltete Objekt VO1 die Ereignisinformationen an einen Filteragenten FD1.

Der Filteragent FD1 ist dem verwalteten Objekt VO1 zum Dienst-Agenten DA1 hin vorgelagert und ist beispielsweise ein sogenannter Event oder Alarm Forwarding Discriminator (EFD bzw. AFD). Der Filteragent FD1 enthält Programmcode, der vom Steuermittel des Servers SV2 ausgeführt wird. Bei dem Filteragenten FD1 sind Filterkriterien FK1 gespeichert, mit denen der Filteragent FD1 für den Dienst-Agenten DA1 irrelevante Ereignisinformationen, beispielsweise Softwarestörungen oder Gebühreninformationen, ausfiltert. Die Filterkriterien FK1 können dauerhaft bei dem Filteragenten FD1 gespeichert sein oder den Filteragenten FDA vom Dienst-Agenten DA1 übermittelt worden sein. Jedenfalls sendet der Filteragent FD1 im vorliegenden Fall Ereignisinformationen E1, E2, E3, E8, E9 und E10 über eine Verbindung RF1 des Servers SV2 zu einem Verbindungsmodul RM des Servers SV2. Das Verbindungsmodul RM, das beispielsweise ebenfalls ein Programmmodul ist, dessen Programmcode vom Steuermittel des Servers SV2 ausgeführt wird, sendet die vorgenannten Ereignisinformationen über eine Verbindung R12 zum Dienst-Agenten DA1. Die Verbindung R12 führt beispielsweise über ein Datennetzwerk V1, z.B. ein WAN oder LAN, des Netzwerk-Management-Systems NMS.

Aus den Ereignisinformationen E1 - E3, E9 - E10, die der Dienst-Agent DA1 mit Sende- und Empfangsmitteln TRV empfängt, filtert dieser mittels Filtermitteln FIL die Ereignisinformation E10 aus. Dazu wenden die Filtermittel FIL Filterkriterien FK2 an. Die Ereignisinformation E10 ist in Bezug auf den Dienst, der mittels des Dienst-Agenten DA1 zu erbringen ist, irrelevant. Beispielsweise könnte es sich bei der Ereignisinformation E10 um einen Temperaturmesswert handeln, der zyklisch vom Netzelement N1 versendet wird.

Bei den Filtermitteln FIL sind auch die bereits erläuterten Filterkriterien FK1 eingezeichnet. Hiermit wird angedeutet, dass das Filtermittel FIL die Filterkriterien FK1 beispielsweise mittels der Sende- und Empfangsmittel TRV an den Filteragenten FD1 senden kann. Es ist allerdings auch möglich, dass, beispielsweise wenn der Filteragent FD1 nicht vorgesehen ist, die Filtermittel FIL mehrere Filterkriterien FK1, FK2 bei der Filterung von durch das Netzelement N1 gesendeten Ereignisinformationen anwenden.

Hierbei ist anzumerken, dass die Filtermittel FIL auch nur ein einzelnes Filterkriterium oder eine einzige Filterregel anwenden können. Das mindestens eine Filterkriterium oder die mindestens eine Filterregel können dem jeweiligen Dienst-Agenten, z.B. dem Dienst-Agenten DA1, zumindest teilweise als Konfigurationsdaten bereitgestellt werden und sind somit, beispielsweise durch einen Bediener, manipulierbar. Das Filterkriterium oder die Filterkriterien können auch zumindest teilweise durch den Programmcode des jeweiligen Dienst-Agenten realisiert sein. Kombinationen der beiden vorgenannten Varianten sind ebenfalls möglich.

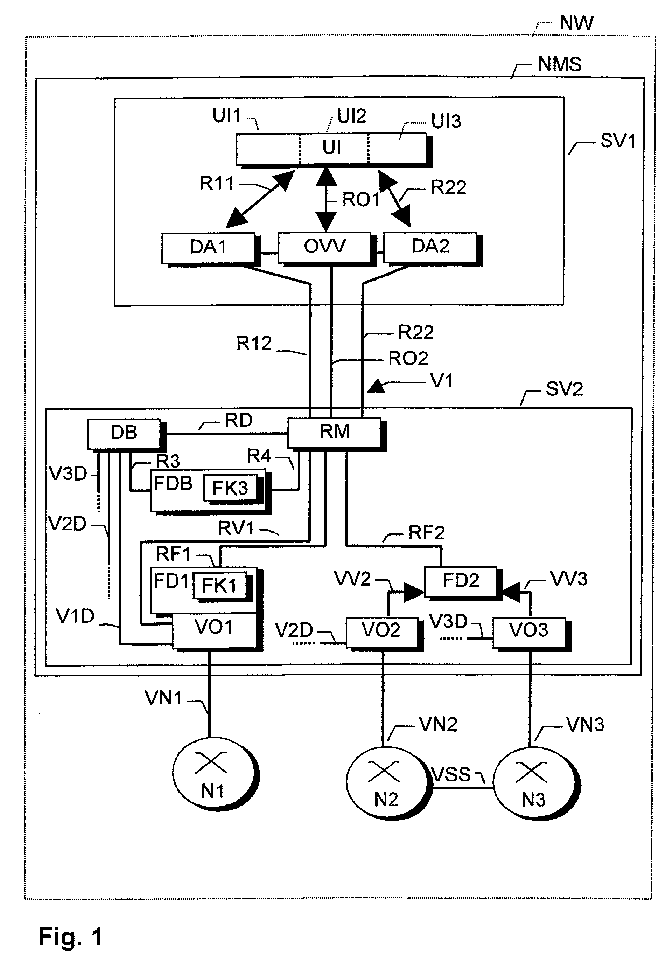

Von den Filtermitteln FIL erhalten Analyse- und Anweisungsmittel ANA - im Folgenden kurz Analysemittel ANA genannt - die für den Dienst-Agenten relevanten Ereignisinformationen E1 - E3, E8, E9. Die Anweisungsmittel ANA ermitteln anhand von Relationsregeln RL1 - RL4 Relationen zwischen den Ereignisinformationen E1 - E3, E8, E9 bezüglich des durch den Dienst-Agenten DA1 zu erbringenden Dienstes und weisen das Bedienoberflächenmodul Ul oder das Bedienoberflächenmodul Ul1 zu einer Ausgabe der vorgenannten Ereignisinformationen gemäß der ermittelten Relationen an, was in Figur 1 durch einen Pfeil R11 dargestellt ist. Das Bedienoberflächenmodul Ul bzw. das Bedienoberflächenmodul Ul1 bildet dabei ein Ausgabemittel. Auch eine beispielsweise vom Betriebssystem des Servers SV1 bereitgestellte sonstige Schnittstelle zur Ansteuerung von beispielsweise einem Monitor und/oder eine Lautsprecher, könnte ein geeignetes Ausgabemittel bilden und gegebenenfalls auch direkt vom Dienst-Agenten DA1 angesteuert werden.

Die Filtermitteln FIL, die Analyse- und Anweisungsmittel ANA und die Sende- und Empfangsmitteln TRV sind beispielsweise Programmfunktionen des Dienst-Agenten DA1.

Das Bedienoberflächenmodul Ul erzeugt eine Bedienoberfläche WUI, die eine Ausgabe der vom Dienst-Agenten DA1 gesendeten Anweisungen vorliegend in Form eines Fensters WDA1 enthält. Das Fenster WDA1 könnte auch vom Bedienoberflächenmodul UI1 erzeugt werden. In dem Fenster WDA1 sind die Ereignisinformationen E1 - E3, E8, E9 sowie die zwischen diesen bestehenden Relationen RL1 - RL4 visualisiert. Die Ereignisinformationen E1 - E3, E8, E9 sind bezüglich des mit Hilfe des Dienst-Agenten DA1 zu erbringenden Dienstes, vorliegend des Behebens einer Hardware-Störung beim Netzelement N1, hierarchisch strukturiert. Dabei hängen von der Ereignisinformation E1 die Ereignisinformationen E2, E3 gemäß der Relationen RL1 bzw. RL2 ab. Sie stehen beispielsweise in einer sogenannten Vater-Sohn-Beziehung zueinander. Die Ereignisinformation E1 betrifft beispielsweise den Ausfall einer Stromversorgung, die Ereignisinformation E2, E3 den Ausfall von von der Stromversorgung abhängigen Baugruppen. Von der Ereignisinformation E2 hängen die Ereignisinformationen E8, E9 gemäß der Relationen RL3 bzw. RL4 ab. Beispielsweise betreffen die Ereignisinformationen E8, E9 gestörte Schaltkreise auf der gemäß der Ereignisinformation E2 als gestört gemeldeten Baugruppe. Dadurch, dass die Ereignisinformation E1 sozusagen als Vater aller nachfolgenden Ereignisinformationen E2, E3, E8, E9 dargestellt ist, wird für einen Bediener der Bedienoberfläche WUI leicht erkennbar, dass die Ereignisinformation E1 von vorrangiger Bedeutung ist und dass möglicherweise nach Beheben der Ursache für die Ereignisinformation E1, beispielsweise nach Aktivieren einer redundanten Stromversorgung, die Ursachen für von der Ereignisinformation E1 abhängigen Ereignisinformationen E2, E3; E8, E9 behoben werden kann. Der Bediener klickt beispielsweise mit der Maus auf die Darstellung der Ereignisinformation E1 und bekommt dann von den Bedienoberflächenmodulen Ul oder UI1 und/oder vom Dienst-Agenten DA1 ein Menü angeboten, den Fehler zu beheben. Beispielsweise ist in dem Menü eine Auswahl von alternativen Stromversorgungen, die an Stelle der defekten Stromversorgung aktiviert werden können, angeboten. Wird eine alternative Stromversorgung vom Bediener aktiviert, wird beispielsweise in Folge davon nicht nur die Ereignisinformation E1 als "aus" gemeldet, sondern auch die abhängigen Ereignisinformationen E2, E3, da ja dann die betreffenden Baugruppen wieder mit Strom versorgt werden, sowie die in zweiter Ebene abhängigen Ereignisinformationen E8, E9, da die Schaltkreise der gemäß Ereignisinformation E2 wieder als funktionierend gemeldeten Baugruppe bei ausreichender Stromversorgung wieder korrekt funktionieren.

Bei der Darstellung der für den mit Hilfe des Dienst-Agenten DA1 zu erbringenden Dienst relevanten Ereignisinformationen sind verschiedene Varianten möglich.

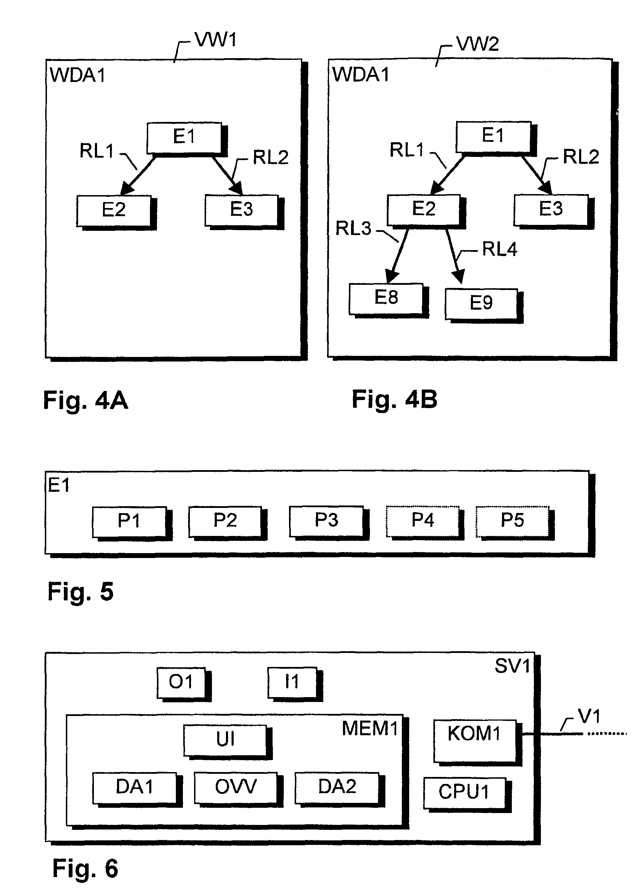

Beispielsweise könnten abhängige Ereignisinformationen, z.B. die Ereignisinformation E2, E3 sowie in zweiter Ebene E8, E9 zunächst für den Bediener der Bedienoberfläche WUI verborgen sein, wobei beispielsweise anfangs lediglich die Ereignisinformation E1 angezeigt wird. Wenn der Bediener die Wiedergabe der Ereignisinformation E1 aktiviert, beispielsweise mit der Maus auf ein entsprechendes Symbol im Fenster WDA1 klickt, werden die von dieser abhängigen Ereignisinformationen E2, E3 sowie die Relationen RL1, RL2 sichtbar, wobei dann z.B. das Fenster WDA1 in der Ausgabeform VW1 gemäß Figur 4a ausgegeben wird. In einer weiteren Aktivierungsstufe kann der Bediener dann auf die Wiedergabe der Ereignisinformation E2 mit der Maus klicken und erhält dann die Ausgabeform VW2 gemäß Figur 4b, bei der auch die Ereignisinformationen E8, E9 bzw. die Relationen RL3, RL4 ausgegeben werden.

Die Relationen RL1 - RL4 werden vorliegend als Pfeile dargestellt, wobei andere Darstellungsformen ohne Weiteres möglich wären. Beispielsweise könnten einfache Linien vorgesehen sein. Ferner müssen die Relationen RL1 - RL4 nicht unbedingt als separate Bildelemente dargestellt sein. Es ist beispielsweise auch denkbar, dass die Abhängigkeit von Ereignisinformationen untereinander dadurch visualisiert wird, dass die betreffenden Ereignisinformationen in räumlicher Nähe zueinander und/oder in gleichen oder korrelierenden Farben dargestellt sind.

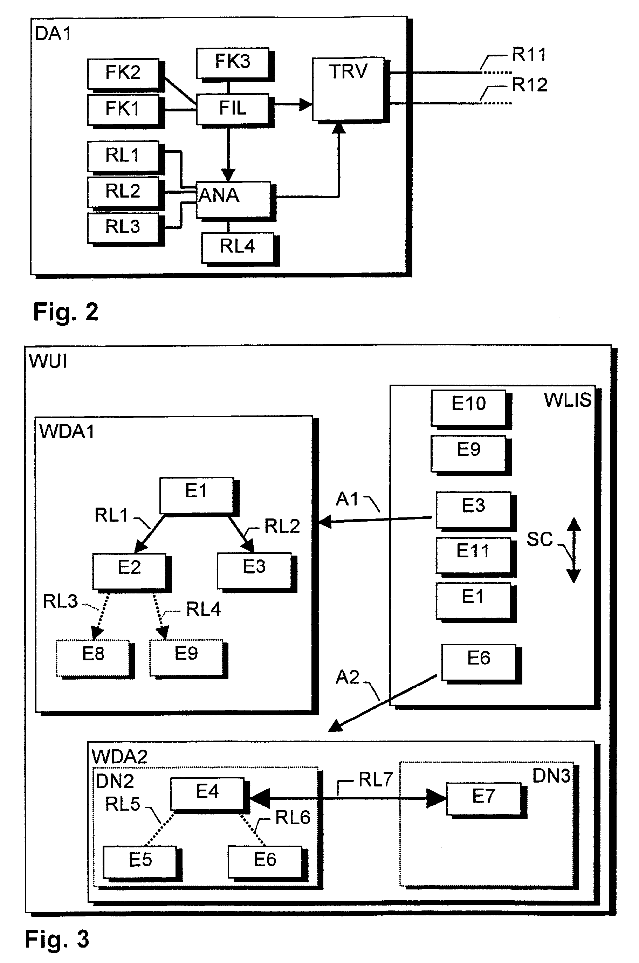

Beim vorgenannten Beispiel sind unterschiedliche Ausgabeformen VW1, VW2 vorgesehen, bei denen Ereignisinformationen teilweise unterdrückt bzw. nicht unterdrückt werden. Es ist aber auch möglich, dass alle Ereignisinformationen oder zumindest ein Großteil der Ereignisinformationen, gleichzeitig ausgegeben werden. Beispielsweise werden bei der Darstellung des Fensters WDA1 gemäß Figur 3 alle Ereignisinformationen E1 - E9 dargestellt. Allerdings werden die weniger relevanten Ereignisinformationen E8, E9 nachrangig zu den Ereignisinformationen E1 - E3 ausgegeben. In der Figur ist dies durch gestrichelte Linien dargestellt. In der Praxis könnte dies beispielsweise durch zurückhaltende Farben, Schattierung oder dergleichen erfolgen. Die besondere Relevanz der Ereignisinformation E1 kann bei dem Fenster WDA1 beispielsweise dadurch hervorgehoben werden, dass das betreffende Symbol in einer leuchtenden, hellen Farbe dargestellt ist und/oder blinkt.

Wie bereits oben erwähnt, können die Ereignisinformationen im Fenster WDA1 als aktivierbare Bildelemente, beispielsweise als Symbole, dargestellt sein. Durch Aktivierung eines solchen Bildelements wird eine Folgereaktion ausgelöst, beispielsweise ein kontext-sensitives Menü angeboten und/oder eine andere Darstellungsform einer oder mehrerer Ereignisinformationen, beispielsweise eine detailliertere Darstellung der Ereignisinformationen.

Anteile der an sich relevanten Ereignisinformation E1 können für den mit Hilfe des Dienst-Agenten DA1 zu erbringenden Dienst unterschiedliche Relevanz aufweisen. Bei einer ersten Darstellungsform der Ereignisinformation E1 gibt der Dienst-Agent DA1 dem Bedienoberflächenmodul Ul oder dem Bedienoberflächenmodul UI1 beispielsweise eine Anweisung dahingehend, dass lediglich Parameter P1 - P3 der Ereignisinformation E1 angezeigt werden, während Parameter P4, P5 (siehe Figur 5) unterdrückt werden. Bei den Parametern P4, P5 handelt es sich beispielsweise um weniger und/oder nicht relevante Anteile der Ereignisinformation E1 bezüglich des mit Hilfe des Dienst-Agenten DA1 zu erbringenden Dienstes. Beispielsweise könnte der Parameter P4 Leistungswerte der ausgefallenen Stromversorgungsbaugruppe angeben. Diese Information ist zumindest in einem ersten Schritt der Störungsbeseitigung, beispielsweise dem Umschalten auf ein zum Netzelement N1 redundanten Netzelement, noch nicht relevant. Bei einer zweiten Darstellungsform der Ereignisinformation E1 werden dann auch die Parameter P4, P5 ausgegeben.

Bei einer weiteren Darstellungsweise von Ereignisinformationen und Relationen zwischen diesen könnte beispielsweise die Ereignisinformation E1 auf einer ersten Registerkarte, angezeigt werden, während die Ereignisinformationen E2, E3 auf einer zweiten, zunächst von der ersten Registerkarte verdeckten Registerkarte angezeigt werden. Der Bediener der Bedienoberfläche WUI kann dann zwischen den beiden Registerkarten und evtl. einer dritten, die Ereignisinformation E8, E9 enthaltenden Registerkarte, hin- und herblättern.

Im Folgenden werden weitere Varianten erfindungsgemäßer Bearbeitung von Ereignisinformationen im Zusammenhang mit dem Dienst-Agenten DA2 vorgestellt.

Der Dienst-Agent DA2 ist vorliegend dafür vorgesehen, die Verbindung VSS zwischen den Netzelementen N2, N3 zu steuern und zu überwachen. Die Netzelemente N2, N3 melden Ereignisinformationen über die Verbindungen VN2 bzw. VN3 an die verwalteten Objekte VO2, VO3. Diese leiten über Verbindungen V2D bzw. V3D an die Datenbank DB sowie über Verbindungen W2 bzw. W3 an einen Filteragenten FD2. Der Filteragent FD2 ist ein Event oder Alarm Forwarding Discriminator, der für den Dienst-Agenten DA2 irrelevante Ereignisinformationen ausfiltert. Der Filteragent FD2 leitet vorliegend alle Ereignisinformationen, die in irgendeiner Weise die Verbindung VSS betreffen, an den Dienst-Agenten DA2 über die Verbindungen RF2, R22 sowie das zwischen diesen liegende Verbindungsmodul RM an den Dienst-Agenten DA2. Diese Ereignisinformationen umfassen beispielsweise, ob eines der Netzelemente N2, N3 gestört oder ausgefallen ist, ob bei einem oder beiden der Netzelemente N2, N3 eine die Verbindung VSS bedienende Ein-/Ausgabebaugruppe ausgefallen ist, die Auslastung der Verbindung VSS und auf der Verbindung VSS anfallende Gebühren. Soweit von den Netzelementen N2, N3 gesendete Ereignisinformationen die Verbindung VSS nicht betreffen, demnach für den Dienst-Agenten DA2 irrelevant sind, werden diese vom Filteragenten FD2 anhand von vordefinierten und/oder vom Dienst-Agenten DA2 übermittelten, nicht dargestellten Filterkriterien ausgefiltert. Für den Dienst-Agenten DA2 relevante Ereignisinformationen sind beispielsweise Ereignisinformationen E4 - E7, wohingegen eine Ereignisinformation E11 für den Dienst-Agenten DA2 bzw. für den Dienst, der mit diesem erbracht werden soll, irrelevant ist.

Der Dienst-Agent DA2 erhält beim Ausführungsbeispiel bereits gefilterte, für ihn relevante Ereignisinformationen E4 - E7. Die nicht dargestellten Filtermittel des Dienst-Agenten DA2 sind lediglich dafür vorgesehen, Filterkriterien an einen externen Filteragenten, vorliegend den Filteragenten FD2, zu versenden. Es ist auch möglich, dass der Dienst-Agent DA2 den Filteragenten FD2 startet, ihm die notwendigen Filterkriterien mitteilt und, beispielsweise wenn der Dienst-Agent DA2 beendet wird, den Filteragenten FD2 wieder beendet. Ferner kann der Dienst-Agent DA2 dem Filteragenten FD2 während dessen Betriebs andere Filterkriterien zusenden und diesen somit sozusagen umkonfigurieren.

Der Dienst-Agent DA2 ermittelt zwischen den relevanten Ereignisinformationen E4 - E7 Relationen RL5 - RL7 und weist das Bedienoberflächenmodul Ul oder das Bedienoberflächenmodul UI3 zur Ausgabe der Ereignisinformationen E4 - E7 gemäß der Relationen RL5 - RL7 an. In der Figur ist dies dargestellt durch einen Pfeil R22. Gemäß den Instruktionen des Dienst-Agenten DA2 gibt das Bedienoberflächenmodul Ul bei seiner Bedienoberfläche WUI ein Fenster WDA2 aus (bei der Variante der Erfindung gibt das Bedienoberflächenmodul U13 das Fenster WDA2 aus), das die Ereignisinformationen E4 - E7 in der vom Dienst-Agenten DA2 geforderten Weise darstellt: Die Ereignisinformation E4 betrifft z.B. eine Verbindungsbaugruppe zum Aufbau und Betreiben der Verbindung VSS des Netzelements N2. Diese ist ausgefallen und dementsprechend wird die Ereignisinformation E4 angezeigt. Bedingt durch den Ausfall dieser Verbindungsbaugruppe ist auch beim Netzelement N3 eine die Verbindung VSS bedienende Verbindungsbaugruppe ausgefallen oder meldet zumindest einen Fehler, was durch die Ereignisinformation E7 bezüglich des Netzelementes N3 deutlich wird. Die Ereignisinformationen E4, E7 werden vom Dienst-Agenten DA2 als gleichwertig eingestuft und dementsprechend auf einer Ebene dargestellt. Zwischen den Ereignisinformationen E4, E7 wird die Relation RL7 durch einen Doppelpfeil verdeutlicht. Die Ereignisinformation E7 wird in einem dem Netzelement DN3 zugeordneten Anzeigebereich DN3 angezeigt, die Ereignisinformation E4 in einem dem Netzelement N2 zugeordneten Anzeigebereich DN2. In letzterem werden auch die Ereignisinformationen E5, E6 angezeigt, welche mit der Ereignisinformation E4 durch Relationen RL5, RL6 verbunden sind. Beispielsweise kann die Ereignisinformation E5 eine Fehlermeldung eines Gebührenerfassungsmoduls betreffen, das in Folge des der Ereignisinformation E4 zu Grunde liegenden Fehlers, des Ausfalls der Verbindungsbaugruppe, in einen Störungszustand fällt und dementsprechend eine die Ereignisinformation E5 enthaltende Fehlermeldung versendet.

Wie bereits erläutert, melden die Netzelemente N1 - N3 bzw. die diese repräsentierenden verwalteten Objekte VO1 - VO3 Ereignisinformationen auch an die Datenbank DB. Die Datenbank DB dient vorliegend als Sammelagent zum Erfassen aller von den Netzelementen N1 - N3 stammenden Ereignisinformationen. Es ist aber auch möglich, dass anstatt der Datenbank DB oder in Ergänzung zu dieser ein separater Sammelagent zum Erfassen der von den Netzelementen N1 - N3 gemeldeten Ereignisinformationen vorgesehen ist. Die Datenbank DB übermittelt die empfangenen Ereignisinformationen ungefiltert über eine Verbindung RD an das Verbindungsmodul RM. Das Verbindungsmodul RM leitet die Ereignisinformationen über eine Verbindung R02 an das Listenmodul OVV, welches über eine Verbindung RO1 das Bedienoberflächenmodul Ul oder das Bedienoberflächenmodul U12 zur Ausgabe der Ereignisinformationen in Form einer Ereignisliste WLIS anweist.

Die Ereignisliste WLIS ist vorliegend ein Fenster mit einem sogenannten Scroll-Balken SC, mit dem der Anzeigebereich des Fensters verstellt werden kann. In der Ereignisliste WLIS werden Ereignisinformationen in an sich bekannter Weise dargestellt, wobei die Ereignisinformationen beispielsweise in der Reihenfolge ihres Eingangs angezeigt werden. Beispielhaft für weitere, nicht dargestellte Ereignisinformationen enthält die Ereignisliste, die Ereignisinformationen E10, E8, E3, E11, E1, E6. Durch die unstrukturierte Darstellung der vorgenannten Ereignisinformationen in an sich bekannter Weise ist die Bedienung der Bedienoberfläche WUI für einen Bediener vergleichsweise schwierig, was insbesondere durch die im direkten Vergleich erkennbar anschaulichere und übersichtlichere erfindungsgemäße Darstellung der Ereignisinformationen in den Fenstern WDA1, WDA2 deutlich wird.

Die vorliegende Ereignisliste WLIS ermöglicht jedoch im Unterschied zu bekannten Listendarstellungen ein komfortables Navigieren auf der Bedienoberfläche WUI zu den Fenstern WDA1,WDA2. Beispielsweise durch Klicken mit einer Maus auf die Ereignisinformation E3 in der Ereignisliste WLIS erfolgt eine Aktion A1, bei der zum Fenster WDA1 des Dienst-Agenten DA1 umgeschaltet wird. Entsprechendes gilt für ein Klicken auf die Ereignisinformation E6 in der Ereignisliste WLIS, wobei in einer Aktion A2 das Fenster WDA2 geöffnet oder auf dieses umgeschaltet wird. Der Bediener der Bedienoberfläche WOI erhält auf diese Weise sehr schnell einen Überblick, in welchen Kontext eine Ereignisinformation aus der Ereignisliste WLIS zu setzen ist. Beispielsweise ist die Ereignisinformation E3 im Grunde genommen eine im Vergleich zur Ereignisinformation E1 nachrangige Ereignisinformation, was an der Darstellung gemäß dem Fenster WDA1 deutlich wird. Gleiches gilt sinngemäß für die Ereignisinformation E6 und das Fenster WDA2.

Beim Aktiveren A1, A2 einer Ereignisinformation in der Ereignisliste WLIS geschieht beispielsweise folgendes: Das Bedienoberflächenmodul Ul bzw. das Bedienoberflächenmodul Ul2 meldet den Aktivierungsvorgang an das Listenmodul OVV, welches dann beispielsweise den Dienst-Agenten DA1 und/oder DA2 startet. Dieser erzeugt dann das Fenster WDA1 bzw. WDA2. Es ist auch möglich, dass bei den Bedienoberflächenmodulen Ul bzw. UI2 eine Zuordnungstabelle abgelegt ist, anhand derer das jeweilige Bedienoberflächenmodul Ul bzw. Ul2 ermitteln kann, welcher Dienst-Agent DA1, DA2 zu aktivieren ist.

Es versteht sich, dass der Aktivierungsvorgang auch umgekehrt von den Fenstern WDA1, WDA2 der Dienst-Agenten DA1, DA2 ausgehen kann. Beispielsweise könnte beim Aktivieren der Ereignisinformation E3 im Fenster WDA1 die Ereignisliste WLIS vom Bedienoberflächenmodul Ul aufgeblendet werden oder ein entsprechender Befehl an das Bedienoberflächenmodul Ul2 gesendet werden. Ferner kann ein Dienst-Agent gegebenenfalls auch weitere Dienst-Agenten aktivieren. Beispielsweise kann eine Ereignisinformation für mehrere Dienst-Agenten relevant sein. Wird eine solche Ereignisinformation in einem Dienst-Agenten aktiviert, beispielsweise durch Maus-Doppelklick oder eine sonstige Bedienereingabe, können daraufhin einer oder mehrere Dienst-Agenten, für die die betreffende Ereignisinformation ebenfalls relevant ist, aktiviert werden.

Die Dienst-Agenten DA1, DA2 können ständig in Betrieb sein, d.h. beispielsweise beim Systemstart des Servers SV1 gestartet werden und erst dann wieder beendet werden, wenn der Betrieb des Servers SV1 beendet werden soll. Es ist aber auch möglich, dass die Dienst-Agenten DA1, DA2 fallweise, d.h. auf Bedarf, gestartet werden, beispielsweise mittels einer Bedienhandlung an der Bedienoberfläche UI.

In diesem Zusammenhang soll auch erwähnt sein, dass das Bedienoberflächenmodul Ul sozusagen nur das Start-Fenster des Netzwerk-Management-Systems NMS erzeugen kann, von welchem aus die Dienst-Agenten DA1, DA2 und/oder das Listenmodul OVV und/oder die Bedienoberflächenmodule UI1-UI3 bei Bedarf, beispielsweise durch eine geeignete Bedienhandlung, aktivierbar sind.

Beispielsweise wird der Dienst-Agent DA1 im folgenden Szenario durch eine Bedienereingabe, z.B. durch einen Mausklick auf die Ereignisinformation E3 in der Ereignisliste WLIS, gestartet. Der Server SV1 beginnt dann, den Programmcode des Dienst-Agenten DA1 auszuführen. Der Dienst-Agent DA1 fragt beim Server SV2 die für ihn relevanten Ereignisinformationen ab.

Dabei kann der Dienst-Agent DA1 eine Anfrage an die Datenbank DB senden, alle verfügbaren Ereignisinformationen zu senden. Aus den über die Verbindungen RD, R12 übermittelten Ereignisinformationen filtert dann der Dienst-Agent DA1, beispielsweise mit Hilfe von Filterkriterien FK3, zunächst diejenigen Ereignisinformationen aus, die die Netzelemente N2, N3 betreffen. Durch weitere Filterungen der Ereignisinformationen mittels der Filterkriterien FK1, FK2 ermittelt der Dienst-Agent DA1 die für den mit ihm zu erbringenden Dienst relevanten Ereignisinformationen E1, E2, E3, E8, E9. Die weitere Vorgehensweise bei der Ermittlung von Relationen zwischen diesen Ereignisinformationen wurde bereits beschrieben.

Bei einer anderen Variante zur Filterung der von der Datenbank DB übermittelten Ereignisinformationen startet der Dienst-Agent DA1 einen Filteragenten FDB, der zwischen die Datenbank DB und das Verbindungsmodul RM mittels Verbindungen R3, R4 geschaltet ist. Der Dienst-Agent DA1 weist den Server SV2 zum Starten des Filteragenten FDB an. Zudem übermittelt der Dienst-Agent DA1 dem Server SV2 die Filterkriterien FK3. Die Filterkriterien FK3 können dem Filteragenten FDB beispielsweise als Startparameter übergeben werden. Sie können auch nach dem Start des Filteragenten FDB an diesen übermittelt werden, beispielsweise wenn sich der Dienst-Agent DA1 bei dem Filteragenten FDB registriert. Jedenfalls übermittelt die Datenbank DB dem Filteragenten FDB die in ihr abgelegten Ereignisinformationen. Anhand der Filterkriterien FK3 filtert der Filteragent FDB die für den Dienst-Agenten DA1 irrelevanten Ereignisinformationen bezüglich der Netzelemente N3, N4 aus, während er die das Netzelement N1 betreffenden Ereignisinformationen an den Dienst-Agenten DA1 übermittelt.

Weitere Varianten der Erfindung sind ohne Weiteres möglich:

Bei weiteren Darstellungsweisen von Ereignisinformationen und Relationen zwischen diesen könnten beispielsweise die Baugruppen der Netzelemente N1-N3 dargestellt sein und die Ereignisinformationen im Zusammenhang mit der jeweiligen Baugruppe dargestellt sein, auf die sich eine Ereignisinformation bezieht.

Es versteht sich, dass ein Dienst-Agent auch mehrere sich am jeweiligen Dienst orientierte Darstellungsweisen von Ereignisinformationen und Relationen zwischen diesen erzeugen kann, wobei beispielsweise zwischen der vorgenannten Baugruppen-Darstellung und einer Listendarstellung oder einer tabellarischen Darstellung der Ereignisinformationen - durch eine Bedienhandlung und/oder durch den Dienst-Agenten selbst - umgeschaltet wird.

Beispielsweise könnte der Filteragent FDB einen Bestandteil der Datenbank DB oder eines sonstigen Sammelagenten bilden. Die Dienst-Agenten DA1 und/oder DA2 könnten ein Bestandteil des Bedienoberflächenmoduls Ul bilden.

Neben den Dienst-Agenten DA1, DA2 könnten auch weitere Dienst-Agenten bei dem Server SV1 vorgesehen sein.

Die Dienst-Agenten DA1, DA2 könnten auch vom Server SV2 ausgeführt werden und beispielsweise über die Bedienoberfläche Ul des Servers SV1 gesteuert werden. Es ist zudem möglich, dass die Dienst-Agenten DA1 als Client-Server-Applikation ausgeführt sind, wobei beispielsweise der Server-Part vom Server SV2 und der Client-Part vom Server SV2 ausgeführt wird. Auch hierbei ist es denkbar, dass der oder die Client-Part(s) einen Bestandteil des Bedienoberflächenmoduls Ul bilden.

Es versteht sich, dass die Erfindung bei jeder Art von Kommunikationsnetzen anwendbar ist. Beispielsweise könnten die Netzelemente N1 - N3 Rechner, z.B. Personal Computer oder Workstations, eines Rechnernetzwerkes sein.

Die verwalteten Objekte VO1 - VO3 können den Dienst-Agenten DA1, DA2 Ereignisinformationen spontan, d.h. ohne eine vorhergehende Abfrage, zusenden. Es ist aber auch möglich, dass die Dienst-Agenten DA1, DA2 z.B. zyklisch bei den Filteragenten FD1 bzw. FD2 und/oder bei den verwalteten Objekten VO1 bzw. VO2, VO3 Ereignisinformationen abfragen.

## Patentansprüche

1. Verfahren zur Bedienung eines Telekommunikationsnetzes (NW), bei dem
- mindestens ein Netzelement (N1-N3) des Telekommunikationsnetzes (NW) betreffende Ereignisinformationen (E1-E11) an einen Dienst-Agenten (DA1, DA2) für einen Wartungs- und/oder Überwachungs- und/oder Steuerungs-Dienst bezüglich des mindestens einen Netzelementes (N1-N3) übermittelt werden,
- die für den mit Hilfe des Dienst-Agenten (DA1, DA2) zu erbringenden Dienst irrelevanten Ereignisinformationen (E10, E11) ausgefiltert werden,
- der Dienst-Agent (DA1, DA2) mindestens eine Relation (RL1) zwischen mindestens einer ersten relevanten Ereignisinformation (E1) und mindestens einer zweiten Ereignisinformation (E2) bezüglich des zu erbringenden Dienstes ermittelt, und
- der Dienst-Agent (DA1, DA2) Ausgabemittel (UI) zu einer Ausgabe der mindestens einen ersten Ereignisinformation (E1) und/oder der mindestens einen zweiten Ereignisinformation (E2) gemäß der mindestens einen Relation (RL1) anweist.

2. Verfahren nach Anspruch 1, **dadurch gekennzeichnet, dass** die mindestens eine erste Ereignisinformation (E1) und die mindestens eine zweite. Ereignisinformation (E2) in Abhängigkeit von ihrer Relevanz für den zu erbringenden Dienst ausgegeben werden.

3. Verfahren nach Anspruch 1, **dadurch gekennzeichnet, dass** der Dienst-Agent (DA1, DA2) bei der Ermittlung der mindestens einen Relation (RL1 ) ermittelt, dass die mindestens eine zweite Ereignisinformation (E2) von der mindestens einen ersten Ereignisinformation (E1) abhängig ist.

4. Verfahren nach Anspruch 3, **dadurch gekennzeichnet, dass** die mindestens eine erste Ereignisinformation (E1), vorrangig vor der mindestens einen zweiten Ereignisinformation (E2) ausgegeben wird.

5. Verfahren nach Anspruch 3, **dadurch gekennzeichnet, dass** eine erste Ausgabeform (VW1) vorgesehen ist, bei der die mindestens eine zweite Ereignisinformation (E2) unterdrückt wird, und dass eine zweite Ausgabeform (VW2) vorgesehen ist, bei der die mindestens eine zweite Ereignisinformation (E2) ausgegeben wird.

6. Verfahren nach Anspruch 1, **dadurch gekennzeichnet, dass** die relevanten Ereignisinformationen (E1-E9) im Wesentlichen in einer hierarchischen, insbesondere baumartigen Darstellung ausgegeben werden.

7. Verfahren nach Anspruch 1, **dadurch gekennzeichnet, dass** im Wesentlichen nur derjenige Anteil (P1-P3) einer insgesamt für den zu erbringenden Dienst relevanten Ereignisinformation (E1) ausgegeben wird, der bezüglich des zu erbringenden Dienstes relevant ist.

8. Verfahren nach Anspruch 1, **dadurch gekennzeichnet, dass** die mindestens eine erste Ereignisinformation (E1) und die mindestens eine zweite Ereignisinformation (E2) gemäß der mindestens einen Relation (RL1) in einer am jeweiligen Wartungs- und/oder Überwachungs- und/oder Steuerungs-Dienst orientierten Ausgabeform ausgegeben werden, insbesondere in Form einer Liste und/oder einer Hierarchiedarstellung und/oder in grafischer Darstellung.

9. Verfahren nach Anspruch 1, **dadurch gekennzeichnet, dass** ein Sammelagent (DB), der die das mindestens eine Netzelement (N1-N3) des Telekommunikationsnetzes (NW) betreffenden Ereignisinformationen (E1-E11) erfasst, und/oder der Dienst-Agent (DA1, DA2) und/oder ein diesem vorgelagerter Filter-Agent (FD1, FD2, FDB) die für den zu erbringenden Dienst irrelevanten Ereignisinformationen (E10, E11) zumindest teilweise ausfiltert.

10. Verfahren nach Anspruch 1, **dadurch gekennzeichnet, dass** durch eine Bedienoberfläche (Ul) mindestens eine Ereignisinformation (E3, E6) angezeigt wird, die in Bezug auf den mit Hilfe des Dienst-Agenten (DA1, DA2) zu erbringenden Dienst relevant ist, und dass der Dienst-Agent (DA1, DA2) bei einer Bedienereingabe bezüglich der angezeigten mindestens einen Ereignisinformation (E3, E6) aktiviert wird.

11. Dienst-Agent für einen Wartungs- und/oder Überwachungs- und/oder Steuerungs-Dienst bezüglich mindestens eines Netzelementes (N1-N3) eines Telekommunikationsnetzes (NW),
- mit Empfangsmitteln (TRV) zum Empfangen von Ereignisinformationen (E1-E11), die das mindestens eine Netzelement (N1-N3) betreffen,
- mit Filtermitteln (FIL) zum Ausfiltern von für den mit Hilfe des Dienst-Agenten (DA1, DA2) zu erbringenden Dienst irrelevanten Ereignisinformationen (E10, E11), und
- mit Analyse- und Anweisungsmitteln (ANA) zum Ermitteln mindestens einer Relation (RL1) zwischen mindestens einer ersten relevanten Ereignisinformation (E1) und mindestens einer zweiten Ereignisinformation (E2) bezüglich des zu erbringenden Dienstes und zum Anweisen von Ausgabemitteln (Ul) zu einer Ausgabe der mindestens einen ersten Ereignisinformation (E1) und/oder der mindestens einen zweiten Ereignisinformation (E2) gemäß der mindestens einen Relation (RL1).

12. Dienst-Agent nach Anspruch 11, **dadurch gekennzeichnet, dass** die Filtermittel (FIL) zur Anwendung mindestens eines Filterkriteriums (FK1-FK3) durch den Dienst-Agenten (DA1, DA2) und/oder zum Senden mindestens eines Filterkriteriums (FK1-FK3) an mindestens einen dem Dienst-Agenten (DA1, DA2) vorgelagerten Filter-Agenten (FD1, FD2, FDB) und/oder einen Sammelagent (DB) ausgestaltet sind, wobei der Sammelagent (DB) zum Erfassen von das mindestens eine Netzelement (N1-N3) betreffenden Ereignisinformationen (E1-E11) vorgesehen ist.

13. Netzwerk-Management-System (NMS), insbesondere in Gestalt mindestens eines Rechners (SV1, SV2) eines Netzwerk-Management-Systems oder eines Bedienoberflächenmoduls (UI), zur Bedienung eines Telekommunikationsnetzes (NW), **dadurch gekennzeichnet, dass** es mindestens einen Dienst-Agenten (DA1, DA2) nach Anspruch 11 enthält.

14. Dienst-Agent nach Anspruch 11, **dadurch gekennzeichnet, dass** die Empfangsmittel, die Filtermittel und die Analyse- und Anweisungsmittel von Programmcode gebildet werden, der von einem Steuermittel (CPU1) eines Rechners (SV1), insbesondere eines Rechners eines Netzwerk-Management-Systems (NMS), ausgeführt werden kann.

15. Speichermittel, insbesondere Diskette oder CD-ROM, Digital Versatile Disc, Festplattenlaufwerk oder dergleichen, mit einem darauf gespeicherten Dienst-Agenten (DA1, DA2) nach Anspruch 14.

## Geänderte Patentansprüche

### Geänderte Patentansprüche gemäss Regel 86(2) EPÜ.

**1.** Verfahren zur Bedienung eines Telekommunikationsnetzes (NW), bei dem
- mindestens ein Netzelement (N1-N3) des Telekommunikationsnetzes (NW) betreffende Ereignisinformationen (E1-E11) an einen Dienst-Agenten (DA1, DA2) für einen Wartungs- und/oder Überwachungs- und/oder Steuerungs-Dienst bezüglich des mindestens einen Netzelementes (N1-N3) übermittelt werden,
- die für den mit Hilfe des Dienst-Agenten (DA1, DA2) zu erbringenden Dienst irrelevanten Ereignisinformationen (E10, E11) ausgefiltert werden,
- der Dienst-Agent (DA1, DA2) mindestens eine Relation (RL1) zwischen mindestens einer ersten relevanten Ereignisinformation (E1) und mindestens einer zweiten Ereignisinformation (E2) bezüglich des zu erbringenden Dienstes ermittelt, und
- der Dienst-Agent (DA1, DA2) Ausgabemittel (Ul) zu einer Ausgabe der mindestens einen ersten Ereignisinformation (E1) und/oder der mindestens einen zweiten Ereignisinformation (E2) gemäß der mindestens einen Relation (RL1) anweist.

**2.** Verfahren nach Anspruch 1, **dadurch gekennzeichnet, dass** die mindestens eine erste Ereignisinformation (E1) und die mindestens eine zweite Ereignisinformation (E2) in Abhängigkeit von ihrer Relevanz für den zu erbringenden Dienst ausgegeben werden.

**3.** Verfahren nach Anspruch 1, **dadurch gekennzeichnet, dass** der Dienst-Agent (DA1, DA2) bei der Ermittlung der mindestens einen Relation (RL1) ermittelt, dass die mindestens eine zweite Ereignisinformation (E2) von der mindestens einen ersten Ereignisinformation (E1) abhängig ist.

**4.** Verfahren nach Anspruch 3, **dadurch gekennzeichnet, dass** die mindestens eine erste Ereignisinformation (E1), vorrangig vor der mindestens einen zweiten Ereignisinformation (E2) ausgegeben wird.

**5.** Verfahren nach Anspruch 3, **dadurch gekennzeichnet, dass** eine erste Ausgabeform (VW1) vorgesehen ist, bei der die mindestens eine zweite Ereignisinformation (E2) unterdrückt wird, und dass eine zweite Ausgabeform (VW2) vorgesehen ist, bei der die mindestens eine zweite Ereignisinformation (E2) ausgegeben wird.

**6.** Verfahren nach Anspruch 1, **dadurch gekennzeichnet, dass** die relevanten Ereignisinformationen (E1-E9) im Wesentlichen in einer hierarchischen, insbesondere baumartigen Darstellung ausgegeben werden.

**7.** Verfahren nach Anspruch 1, **dadurch gekennzeichnet, dass** im Wesentlichen nur derjenige Anteil (P1-P3) einer insgesamt für den zu erbringenden Dienst relevanten Ereignisinformation (E1) ausgegeben wird, der bezüglich des zu erbringenden Dienstes relevant ist.

**8.** Verfahren nach Anspruch 1, **dadurch gekennzeichnet, dass** die mindestens eine erste Ereignisinformation (E1) und die mindestens eine zweite Ereignisinformation (E2) gemäß der mindestens einen Relation (RL1) in einer am jeweiligen Wartungs- und/oder Überwachungs- und/oder Steuerungs-Dienst orientierten Ausgabeform ausgegeben werden, insbesondere in Form einer Liste und/oder einer Hierarchiedarstellung und/oder in grafischer Darstellung.

**9.** Verfahren nach Anspruch 1, **dadurch gekennzeichnet, dass** ein Sammelagent (DB), der die das mindestens eine Netzelement (N1-N3) des Telekommunikationsnetzes (NW) betreffenden Ereignisinformationen (E1-E11) erfasst, und/oder der Dienst-Agent (DA1, DA2) und/oder ein diesem vorgelagerter Filter-Agent (FD1, FD2, FDB) die für den zu erbringenden Dienst irrelevanten Ereignisinformationen (E10, E11) zumindest teilweise ausfiltert.

**10.** Verfahren nach Anspruch 1, **dadurch gekennzeichnet, dass** durch eine Bedienoberfläche (Ul) mindestens eine Ereignisinformation (E3, E6) angezeigt wird, die in Bezug auf den mit Hilfe des Dienst-Agenten (DA1, DA2) zu erbringenden Dienst relevant ist, und dass der Dienst-Agent (DA1, DA2) bei einer Bedienereingabe bezüglich der angezeigten mindestens einen Ereignisinformation (E3, E6) aktiviert wird.

**11.** Verfahren zur Bedienung eines Telekommunikationsnetzes (NW), bei dem
- mindestens ein Netzelement (N1-N3) des Telekommunikationsnetzes (NW) betreffende Ereignisinformationen (E1-E11) an einen Dienst-Agenten (DA1, DA2) für einen Wartungs- und/oder Überwachungs- und/oder Steuerungs-Dienst bezüglich des mindestens einen Netzelementes (N1-N3) übermittelt werden,
- die für den mit Hilfe des Dienst-Agenten (DA1, DA2) zu erbringenden Dienst irrelevanten Ereignisinformationen (E10, E11) ausgefiltert werden,
- der Dienst-Agent (DA1, DA2) mindestens eine Relation (RL1) zwischen mindestens einer ersten relevanten Ereignisinformation (E1) und mindestens einer zweiten Ereignisinformation (E2) bezüglich des zu erbringenden Dienstes ermittelt, und
- der Dienst-Agent (DA1, DA2) Ausgabemittel (Ul) zu einer Ausgabe der mindestens einen ersten Ereignisinformation (E1) und/oder der mindestens einen zweiten Ereignisinformation (E2) gemäß der mindestens einen Relation (RL1) anweist, wobei die mindestens eine erste Ereignisinformation (E1) und die mindestens eine zweite Ereignisinformation (E2) in Abhängigkeit von ihrer Relevanz für den zu erbringenden Dienst ausgegeben werden.

**12.** Dienst-Agent für einen Wartungs- und/oder Überwachungs- und/oder Steuerungs-Dienst bezüglich mindestens eines Netzelementes (N1-N3) eines Telekommunikationsnetzes (NW),
- mit Empfangsmitteln (TRV) zum Empfangen von Ereignisinformationen (E1-E11), die das mindestens eine Netzelement (N1-N3) betreffen,
- mit Filtermitteln (FIL) zum Ausfiltern von für den mit Hilfe des Dienst-Agenten (DA1, DA2) zu erbringenden Dienst irrelevanten Ereignisinformationen (E10, E11), und
- mit Analyse- und Anweisungsmitteln (ANA) zum Ermitteln mindestens einer Relation (RL1) zwischen mindestens einer ersten relevanten Ereignisinformation (E1) und mindestens einer zweiten Ereignisinformation (E2) bezüglich des zu erbringenden Dienstes und zum Anweisen von Ausgabemitteln (UI) zu einer Ausgabe der mindestens einen ersten Ereignisinformation (E1) und/oder der mindestens einen zweiten Ereignisinformation (E2) gemäß der mindestens einen Relation (RL1).

**13.** Dienst-Agent nach Anspruch 12, **dadurch gekennzeichnet, dass** die Filtermittel (FIL) zur Anwendung mindestens eines Filterkriteriums (FK1-FK3) durch den Dienst-Agenten (DA1, DA2) und/oder zum Senden mindestens eines Filterkriteriums (FK1-FK3) an mindestens einen dem Dienst-Agenten (DA1, DA2) vorgelagerten Filter-Agenten (FD1, FD2, FDB) und/oder einen Sammelagent (DB) ausgestaltet sind, wobei der Sammelagent (DB) zum Erfassen von das mindestens eine Netzelement (N1-N3) betreffenden Ereignisinformationen (E1-E11) vorgesehen ist.

**14.** Dienst-Agent für einen Wartungs- und/oder Überwachungs- und/oder Steuerungs-Dienst bezüglich mindestens eines Netzelementes (N1-N3) eines Telekommunikationsnetzes (NW) ,
- mit Empfangsmitteln (TRV) zum Empfangen von Ereignisinformationen (E1-E11), die das mindestens eine Netzelement (N1-N3) betreffen,
- mit Filtermitteln (FIL) zum Ausfiltern von für den mit Hilfe des Dienst-Agenten (DA1, DA2) zu erbringenden Dienst irrelevanten Erignisinformationen (E10, E11), und
- mit Analyse- und Anweisungsmitteln (ANA) zum Ermitteln mindestens einer Relation (RL1) zwischen mindestens einer ersten relevanten Ereignisinformation (E1) und mindestens einer zweiten Ereignisinformation (E2) bezüglich des zu erbringenden Dienstes und zum Anweisen von Ausgabemitteln (UI) zu einer Ausgabe der mindestens einen ersten Ereignisinformation (E1) und/oder der mindestens einen zweiten Ereignisinformation (E2) gemäß der mindestens einen Relation (RL1), wobei die mindestens eine erste Ereignisinformation (E1) und die mindestens eine zweite Ereignisinformation (E2) in Abhängigkeit von ihrer Relevanz für den zu erbringenden Dienst ausgegeben werden.

**15.** Dienst-Agent nach Anspruch 12 oder 14, **dadurch gekennzeichnet, dass** er Programmcode enthält, der von einem Steuermittel (CPU1) eines Rechners (SV1), insbesondere eines Rechners eines Netzwerk-Management-Systems (NMS) ausgeführt werden kann.

**16.** Computer lesbares Seichermittel, insbesondere Diskette oder CD-ROM, Digital Versatile Disc, Festplattenlaufwerk oder dergleichen, mit einem darauf gespeicherten Dienst-Agenten (DA1, DA2) nach Anspruch 15.

**17.** Computer lesbares Speichermittel, insbesondere Diskette oder CD-ROM, Digital Versatile Disc, Festplattenlaufwerk oder dergleichen, mit einem darauf gespeicherten Dienst-Agenten für einen Wartungs- und/oder Überwachungs- und/oder Steuerungs-Dienst bezüglich mindestens eines Netzelementes (N1-N3) eines Telekommunikationsnetzes (NW), wobei der Dienst-Agent Programmcode aufweist, der von einem Steuermittel (CPU1) eines Rechners (SV1), insbesondere eines Rechners eines Netzwerk-Management-Systems (NMS) ausgeführt werden kann, wobei der Rechner (SV1) folgende Funktionen ausführen kann:
- Empfangen von Ereignisinformationen (E1-E11), die das mindestens eine Netzelement (N1-N3) betreffen,
- Ausfiltern von für den mit Hilfe des Dienst-Agenten (DA1, DA2) zu erbringenden Dienst irrelevanten Ereignisinformationen (E10, E11), und
- Ermitteln mindestens einer Relation (RL1) zwischen mindestens einer ersten relevanten Ereignisinformation (E1) und mindestens einer zweiten Ereignisinformation (E2) bezüglich des zu erbringenden Dienstes und zum Anweisen von Ausgabemitteln (UI) zu einer Ausgabe der mindestens einen ersten Ereignisinformation (E1) und/oder der mindestens einen zweiten Ereignisinformation (E2) gemäß der mindestens einen Relation (RL1).

**18.** Computer lesbares Speichermittel, insbesondere Diskette oder CD-ROM, Digital Versatile Disc, Festplattenlaufwerk oder dergleichen, mit einem darauf gespeicherten Dienst-Agenten für einen Wartungs- und/oder Überwachungs- und/oder Steuerungs-Dienst bezüglich mindestens eines Netzelementes (N1-N3) eines Telekommunikationsnetzes (NW), wobei der Dienst-Agent Programmcode aufweist, der von einem Steuermittel (CPU1) eines Rechners (SV1), insbesondere eines Rechners eines Netzwerk-Management-Systems (NMS) ausgeführt werden kann, wobei der Rechner (SV1) folgende Funktionen ausführen kann:
- Empfangen von Ereignisinformationen (E1-E11), die das mindestens eine Netzelement (N1-N3) betreffen,
- Ausfiltern von für den mit Hilfe des Dienst-Agenten (DA1, DA2) zu erbringenden Dienst irrelevanten Ereignisinformationen (E10, E11), und
- Ermitteln mindestens einer Relation (RL1) zwischen mindestens einer ersten relevanten Ereignisinformation (E1) und mindestens einer zweiten Ereignisinformation (E2) bezüglich des zu erbringenden Dienstes und zum Anweisen von Ausgabemitteln (UI) zu einer Ausgabe der mindestens einen ersten Ereignisinformation (E1) und/oder der mindestens einen zweiten Ereignisinformation (E2) gemäß der mindestens einen Relation (RL1), wobei die mindestens eine erste Ereignisinformation (E1) und die mindestens eine zweite Ereignisinformation (E2) in Abhängigkeit von ihrer Relevanz für den zu erbringenden Dienst ausgegeben werden.

**19.** Netzwerk-Management-System (NMS), insbesondere in Gestalt mindestens eines Rechners (SV1, SV2) eines Netzwerk-Management-Systems oder eines Bedienoberflächenmoduls (UI), zur Bedienung eines Telekommunikationsnetzes (NW), **dadurch gekennzeichnet, dass** es mindestens einen Dienst-Agenten (DA1, DA2) nach einem der Ansprüche 12 oder 14 und/oder mindestens ein Computer lesbares Speichermittel nach einem der Ansprüche 17 oder 18 enthält.
